# FASCICULE DE BREVET EUROPEEN

(11) **EP 3 208 527 B1**
(45) Date de publication et mention de la délivrance du brevet: **05.07.2023**
(21) Numéro de dépôt: 17156291.1
(22) Date de dépôt: 15.02.2017
(51) Int. Cl.: F21S 41/43, F21S 43/14, F21S 43/20, F21S 43/31, F21S 43/40, F21S 43/50, B60Q 1/30

(54) **FEU DE SIGNALISATION AVEC FAISCEAU FOCALISANT EN RETRAIT DE LA SURFACE EXTÉRIEURE DUDIT FEU**
SIGNALLEUCHTE MIT FOKUSSIERENDEM LICHTSTRAHL
SIGNAL LIGHT DEVICE WITH FOCUSING LIGHT BEAM

(30) Priorité: 16.02.2016 FR 1651242
(43) Date de publication de la demande: 23.08.2017
(73) Titulaire: Valeo Vision Belgique, 7822 Meslin l'Evêque (BE)
(72) Inventeur: FRANC, Alexandre, 59260 Lezennes (FR); DEBERT, Florestan, 59310 Nomain (FR); SACCHET, Dirkie, 7190 Ecaussinnies (BE)
(74) Mandataire: Valeo Visibility

(56) Documents cités:
- EP-A1- 0 098 062
- EP-A1- 0 648 969
- EP-A1- 2 159 481
- EP-A1- 2 587 120
- DE-A1- 10 145 963
- DE-A1- 19 714 367
- DE-U1- 29 602 125
- FR-A1- 2 702 544
- FR-A1- 2 794 218
- FR-A1- 2 802 613
- FR-A1- 3 014 787
- US-A- 5 383 039

## Description

L'invention a trait au domaine de l'éclairage et de la signalisation lumineuse, notamment pour véhicule automobile. Plus particulièrement, l'invention a trait à un feu de signalisation avec faisceau focalisant en retrait de la surface extérieure dudit feu. Plus particulièrement encore, l'invention a trait à un feu stop surélevé notamment destiné à être disposé derrière une vitre ou une glace, notamment une vitre de lunette arrière de véhicule automobile.

Le document de brevet publié FR 2 614 969 A1 divulgue un feu de signalisation avec une plage éclairante étendue, comme par exemple un feu stop pour lunette arrière de véhicule automobile, couramment appelé troisième feu stop. Il comprend une source lumineuse du type ampoule à incandescence, un premier élément optique galbé entourant la source lumineuse et un deuxième élément optique généralement plan. Le premier élément optique comprend une face arrière avec des échelons de Fresnel et une face avant, ou extérieure, présentant également des échelons de Fresnel aptes à répartir de manière homogène la lumière de la source lumineuse le long du deuxième élément optique. Ce dernier est généralement plan et comprend une face arrière également avec des échelons de Fresnel configurés pour dévier les rayons lumineux incidents suivant l'axe optique du feu de signalisation. Le deuxième élément optique est en fait un collimateur. Le feu de signalisation de cet enseignement est intéressant en ce qu'il permet de répartir de manière homogène la lumière suivant la direction principale du feu qui est transversale à l'axe optique.

Le document de brevet publié FR 2 794 218 A1 divulgue un feu de signalisation, également avec plage éclairante étendue, du type feu stop pour lunette arrière de véhicule automobile. Le feu comprend une source lumineuse du type ampoule à incandescence, un collimateur et une lentille plan-convexe apte à faire converger les rayons lumineux parallèles sortant du collimateur vers un segment focal. Pour ce faire, la face arrière de la lentille, généralement convexe, présente une série de godrons ou surfaces courbes s'étendant verticalement. Ces surfaces permettent de faire converger les rayons le long d'un segment focal qui est généralement perpendiculaire à la direction des godrons, et donc généralement horizontal. Le segment focal est situé au niveau de la face intérieure de la vitre sur laquelle le feu est destiné à être monté. La zone de la vitre recevant le feu peut par conséquent être opacifiée, à l'exception toutefois d'une fente correspondant au segment focal. L'intérieur du feu peut ainsi être caché depuis l'extérieur du véhicule par la paroi ou couche opacifiante disposée sur la vitre. De plus, le feu est rendu quasi invisible, lorsqu'il est éteint, depuis l'extérieur du véhicule. Ce design, bien qu'avantageux, présente toutefois quelques inconvénients, comme notamment le fait qu'il impose la présence d'une paroi ou couche opacifiante et que, par conséquent, la surface éclairée est impérativement mince. Le document de brevet publié US 5 383 039 A1 montre un dispositif de signalisation lumineuse monté derrière une vitre de lunette arrière de véhicule automobile.

L'invention a pour objectif de pallier au moins un inconvénient de l'état de la technique, notamment de l'état de la technique susmentionné. Plus particulièrement, l'invention a pour objectif de proposer un feu de signalisation qui confère davantage de liberté par rapport à son aspect éteint et allumé lorsqu'il est disposé derrière une vitre ou une glace.

L'invention a pour objet un dispositif de signalisation lumineuse destiné à être disposé derrière une vitre ou glace, tel que décrit dans la revendication 1, il comprend notamment : un emplacement pour au moins une source lumineuse apte à émettre des rayons lumineux ; un système optique apte à dévier les rayons lumineux émis par la ou les sources lumineuses de manière à converger en un point ou un segment et à former un faisceau lumineux divergeant suivant un axe optique du dispositif ; remarquable en ce qu'il comprend, en outre, un masque s'étendant depuis le système optique, à hauteur du point ou segment de convergence, dans la direction du faisceau lumineux.

Selon l'invention, le masque comprend au moins une, préférentiellement plusieurs parois opaques s'étendant dans la direction du faisceau lumineux depuis le système optique de manière à positionner le point ou segment de convergence à distance de la vitre.

Selon un mode avantageux de l'invention, une des parois du masque est une paroi inférieure et une autre desdites parois est une paroi supérieure.

Selon un mode avantageux de l'invention, les parois inférieure et supérieure sont divergentes dans la direction du faisceau lumineux.

Selon un mode avantageux de l'invention, les parois du masque comprennent des extrémités avant formant un plan moyen de contact avec la vitre qui est incliné par rapport à la perpendiculaire à l'axe optique, ladite inclinaison étant préférentiellement d'au moins 20°, plus préférentiellement d'au moins 30°.

Selon l'invention, le dispositif comprend un élément transparent ou translucide s'étendant transversalement à l'axe optique à hauteur du point ou segment de convergence.

Selon un mode avantageux de l'invention, l'élément transparent ou translucide forme une paroi s'étendant perpendiculairement à l'axe optique.

Selon l'invention, l'élément transparent ou translucide comprend une face avant grainée, ledit grainage préférentiellement présentant une rugosité Rₐ supérieure ou égale à 1µm.

Selon un mode avantageux de l'invention, l'élément transparent ou translucide comprend une face arrière apte à recevoir des rayons lumineux émis par le système optique.

Selon un mode avantageux de l'invention, l'élément transparent ou translucide est, transversalement à l'axe optique, à distance du point ou segment de convergence.

Selon un mode avantageux de l'invention, une des parois inférieure et supérieure, préférentiellement la paroi supérieure, est située, transversalement à l'axe optique, en vis-à-vis de l'élément transparent ou translucide, du côté opposé audit élément par rapport au point ou segment de convergence.

Selon un mode avantageux de l'invention, l'élément transparent ou translucide s'étend, transversalement à l'axe optique, sur le point ou segment de convergence.

Selon un mode avantageux de l'invention, l'élément transparent ou translucide comprend une face avant avec une portion centrale correspondant point ou segment de convergence, et des portions supérieure et inférieure à la portion centrale, lesdites portions supérieure et inférieure étant grainées de manière à être diffusante.

Selon un mode avantageux de l'invention, le grainage des portions supérieure et inférieure de la surface avant de l'élément transparent ou translucide présente une rugosité Rₐ supérieure ou égale à 1 µm.

Selon un mode avantageux de l'invention, la portion centrale de la surface avant de l'élément transparent ou translucide est en retrait ou en saillie par rapport aux portions supérieure et inférieure.

Selon un mode avantageux de l'invention, la portion centrale de la face avant de l'élément transparent ou translucide présente un profil courbe convexe.

Selon un mode avantageux de l'invention, le système optique comprend un collimateur s'étendant suivant une direction principale transversale à l'axe optique et configuré pour dévier suivant ledit axe les rayons lumineux émis par la ou des sources lumineuses ; et une lentille s'étendant suivant une direction principale parallèle à la direction principale du collimateur, configurée pour faire dévier les rayons vers le segment de convergence, ledit segment s'étendant parallèlement au collimateur et à la lentille.

Selon un mode avantageux de l'invention, la lentille comprend une face avant avec des surfaces courbes convexes s'étendant perpendiculairement à la direction principale de la lentille, lesdites surfaces préférentiellement correspondant à des portions de cylindre.

Selon un mode avantageux de l'invention, la lentille comprend une face arrière généralement plane.

Les mesures de l'invention sont intéressantes en ce qu'elles permettent de focaliser le faisceau à distance de la vitre ou la glace, c'est-à-dire à distance de la surface extérieure du dispositif de signalisation lumineuse. Cela confère une certaine liberté pour la réalisation des surfaces visibles depuis l'extérieur ainsi que pour le système optique qui est alors caché. Plus précisément, le fait de prévoir un élément optique transparent ou translucide s'étendant transversalement à l'axe optique, à hauteur du point ou segment focal, permet de diffuser des rayons lumineux non focalisés et, partant, de compléter le faisceau lumineux produit. La ou les faces avant de cet élément pouvant être grainée, elle permet de cacher le système optique tout en assurant une récupération de rayons sinon perdus.

D'autres caractéristiques et avantages de la présente invention seront mieux compris à l'aide de la description et des dessins parmi lesquels :
- La figure 1 est vue arrière d'un véhicule automobile équipé d'un feu stop conforme à l'invention ;
- La figure 2 est une vue en coupe II-II du feu de la figure 1, conformément à un premier mode de réalisation ;
- La figure 3 est une vue en coupe III-III du feu de la figure 1, conformément à un deuxième mode de réalisation ;
- La figure 4 est une représentation de l'élément transparent ou translucide de la figure 3 ainsi qu'une alternative ;
- La figure 5 illustre des exemples de motifs de surface sur les zones grainées de la face avant de l'élément transparent de la figure 3 ;
- La figure 6 illustre deux variantes de construction de l'élément transparent ou translucide de la figure 3.

Les modes de réalisation de l'invention sont illustrés dans les figures et décrits ci-après par rapport à une position de montage du dispositif dans un véhicule en qualité de feu de lunette arrière. Ce type d'application bien que prépondérant n'est pas limitatif.

Les termes employés tels que « horizontal », « vertical », « haut », « bas », « supérieur(e) », « inférieur(e) », « avant » et « arrière » par exemple, décrivant les positions des différents éléments ne sont pas à interpréter d'une manière absolue mais bien relative, décrivant ainsi les positions des éléments par rapport à leur disposition sur les figures. Les dispositifs d'éclairage décrits pourraient être montés dans d'autres positions et/ou pour d'autres applications.

De plus, les positions relatives des différents éléments optiques tels que les sources lumineuses, les éléments optiques et les lentilles exprimées pour la simplicité de compréhension par alignement des axes optiques et/ou correspondance des foyers respectifs ne sont pas à interpréter de manière exacte dans la mesure où de légères variations sont envisageables voire souhaitables en vue, entre autres, de corriger le caractère non parfait et certaines aberrations optiques des éléments optiques ou d'obtenir certains effets supplémentaires.

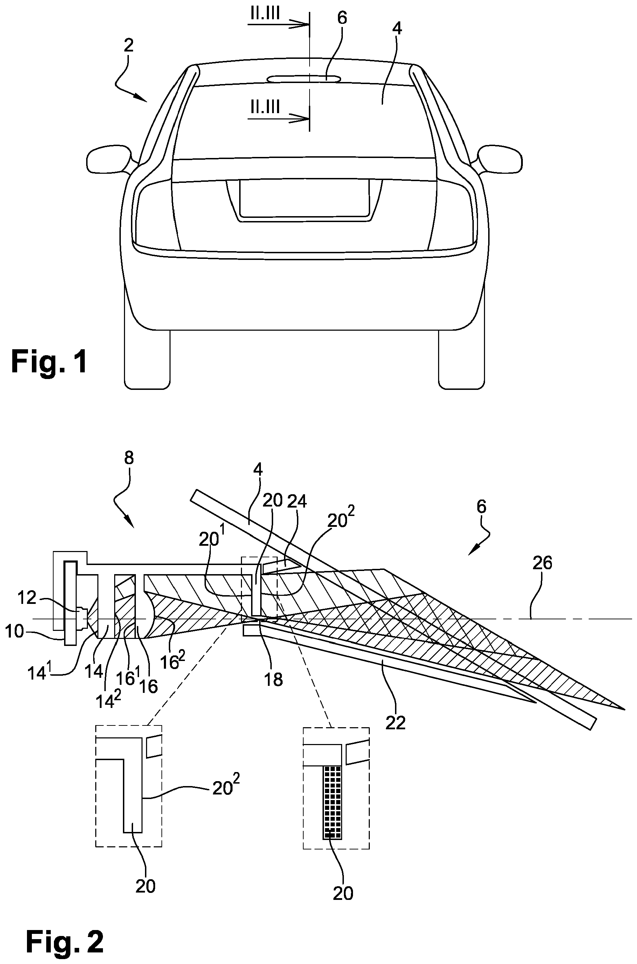

La figure 1 est une vue de l'arrière d'un véhicule automobile 2. De manière classique et connue, le véhicule comprend une lunette arrière 4, cette dernière pouvant être fixe sur la carrosserie ou être sur un ouvrant arrière tel qu'un hayon arrière. Le véhicule 2 comprend un feu de signalisation 6 disposé en haut de la lunette arrière 4, plus précisément derrière ladite lunette. Il s'agit en l'occurrence d'un feu stop, couramment appelé « troisième feu stop », ou feu stop surélevé, en référence aux deux feux stop classiques disposés plus bas à gauche et à droite. Le « troisième feu stop » ou feu stop surélevé est également désigné CHMSL, acronyme de l'expression anglo-saxonne « Center High-Mounted Stop Light ». Un tel feu stop surélevé peut également être installé en bas de la lunette arrière, sur la plage arrière ou monté dans la carrosserie, au-dessus de la lunette arrière ou encore au sommet de la malle de coffre. Lorsqu'il est destiné à être placé derrière la lunette arrière, le feu stop surélevé comporte un boitier dont l'ouverture est fermée par la lunette arrière, tandis que dans le cas où il est intégré dans la carrosserie, il comporte un boitier fermé par une glace transparente ou translucide, le cas échéant colorée en rouge.

La figure 2 est une vue en coupe longitudinale (par rapport au véhicule) selon II-II du dispositif lumineux, ou feu, 6 de la figure 1, conformément à un premier mode de réalisation.

On peut observer que le dispositif lumineux 6 comprend un module lumineux 8 et un masque 22 et 24.

Le module lumineux 8 comprend un support 10 de source(s) lumineuse(s), une ou plusieurs sources lumineuses 12 disposées sur le support 10, un collimateur 14, une lentille convergente 16 et un écran transparent ou translucide 20. Ces éléments sont alignés suivant un axe optique 26 du module. La ou les sources lumineuses 12 peuvent être du type diode à électroluminescence, plus particulièrement du type diode à électroluminescence de puissance comprenant un substrat généralement plan destiné à être fixé, notamment par soudage et/ou collage, à une platine du type circuit imprimé. Le support 10 est avantageusement une telle platine ou circuit imprimé. Les sources lumineuses du type diode à électroluminescence de puissance éclairent essentiellement dans un demi-espace avec toutefois une concentration du faisceau dans un cône d'émission perpendiculaire au substrat de la diode et son support, ledit cône pouvant présenter un angle compris entre 110° et 140°.

Le collimateur 14 est un élément optique transparent ou translucide du type lentille. Il peut s'étendre essentiellement perpendiculairement à l'axe optique et/ou parallèlement au support 10 de source(s) lumineuse(s). Sa face arrière 14¹ (par rapport au sens de propagation des rayons lumineux) et/ou sa face avant 14² peut/peuvent présenter des échelons de Fresnel configurés pour dévier les rayons la traversant de manière à en sortir essentiellement selon la direction de l'axe optique 26. Ces échelons peuvent former des cercles ou du moins des anneaux, notamment lorsque le module est de largeur réduite et/ou lorsqu'il comprend plusieurs sources lumineuses réparties sur la largeur du module, la face avant 14² et/ou la face arrière 14¹ du collimateur 14 présentant plusieurs ensembles d'anneaux, centrés sur les différentes sources lumineuses.

La lentille convergente 16 s'étend essentiellement parallèlement au collimateur et au support de la ou des sources lumineuses. Elle comprend une face arrière 16¹ qui est peut être généralement plane et une face avant 16² qui peut être généralement convexe et bombée vers l'avant de manière à faire converger les rayons la traversant vers un foyer 18. Afin d'assurer la formation d'un faisceau étalé suivant la largeur du dispositif, la face avant 16² de la lentille peut présenter une série de godrons ou surfaces de profil bombé vers l'avant et s'étendant verticalement, adjacentes l'une à l'autre. Ces surfaces peuvent correspondre à des portions de cylindre, ces portions présentant toutefois un profil longitudinal bombé comme cela est visible à la figure 2, plus particulièrement à la vue de détail en perspective du support 10 de source lumineuse 12, du collimateur 14 et de la lentille 16. Ces surfaces en portion de cylindre, par opposition à une face avant en forme de dôme, permettent en effet d'éviter aux rayons de focaliser en un point mais plutôt suivant un segment 18, dit segment de convergence ou segment focal 18. Le profil transversal bombé de ces surfaces verticales permet en effet de concentrer les rayons les traversant suivant une direction verticale, le profil longitudinal bombé assurant leur convergence vers le segment de convergence 18. Alternativement, les godrons peuvent être formés sur la face arrière 16¹ de la lentille.

L'écran transparent ou translucide 20 est situé, longitudinalement, à hauteur du segment de convergence 18. Il forme une paroi s'étendant essentiellement perpendiculairement à l'axe optique 26, avec une face arrière 20¹ généralement plane et lisse, et une face avant 20² qui peut être généralement plane et est grainée de manière à être diffusante. Le grainage peut correspondre à une rugosité Rₐ supérieure ou égale à 1µm. Le grainage peut être réalisé de différentes manières bien connues en soi de l'homme de métier, comme par exemple par attaque chimique, sablage ou dépôt d'un revêtement. De manière complémentaire, l'écran peut comprendre dans sa masse des éléments diffusants. Ces deux configurations sont illustrées dans les vues de détails de l'écran.

Bien que la majeure partie des rayons lumineux suivent les parcours illustrés par les hachures serrées à la figure 2, il reste néanmoins qu'une partie des rayons, représentés par les hachures distantes, se propagent de manière incontrôlée depuis la face avant 14² du collimateur jusqu'à l'élément transparent ou translucide 20. Ces rayons peuvent alors traverser l'élément 20 et être diffusés par sa face avant 20².

L'élément transparent ou translucide 20 s'étend de manière à rester à distance du segment de convergence 18. Les rayons, tels que ceux représentés à la figure 2, qui convergent en ce segment peuvent alors continuer à se propager jusqu'à la vitre 4 et au travers de celle-ci, et former un faisceau lumineux de signalisation suivant l'axe optique 26.

Le dispositif lumineux 6 comprend, outre le module lumineux 8, un masque comportant une paroi inférieure 22 et une paroi supérieure 24. Ces deux parois s'étendent essentiellement dans la direction de l'axe optique 26 jusqu'à la face intérieure de la vitre 4. Ces deux parois peuvent faire partie intégrante du masque. Le masque peut par ailleurs comprendre d'autres parois, comme notamment des parois latérales, non représentées. La paroi inférieure 22 s'étend depuis le bord inférieur de la face avant 20² de l'élément transparent ou translucide 20 jusqu'à la vitre 4, essentiellement parallèlement à l'axe optique. La paroi supérieure 24 quant à elle comprend une portion située au-dessus de segment de convergence 18, en vis-à-vis du bord supérieur de l'élément transparent ou translucide 20, et elle s'étend vers la vitre de manière divergente par rapport à l'axe optique. Elle suit en effet le parcours des rayons formant la partie haute du faisceau lumineux, compte tenu qu'elle s'étend depuis une position proximale du segment de convergence 18.

Le masque 22 et 24 permet ainsi de garder les éléments optiques comme notamment l'élément transparent ou translucide 20 et le segment de convergence 18 à distance de la vitre 4. Le faisceau lumineux éclaire alors une zone de la vitre qui correspond essentiellement à celle délimitée par le masque. Lorsque le dispositif est éteint, le module 8 est peu visible de l'extérieur et la vitre peut rester transparente ou quasi-transparente (éventuellement teintée). Lorsque le dispositif est allumé, la zone de la vitre délimitée par le masque est éclairée et une partie des rayons qui ne convergent pas vers le segment 18 participe à la formation du faisceau via l'élément transparent ou translucide 20. Toujours à l'état allumé du dispositif, la face avant 20² de l'élément transparent ou translucide 20 est éclairée et assure un aspect uniforme du module pour un observateur extérieur.

Il est à noter que l'agencement qui vient d'être décrit avec l'élément transparent ou translucide 20 disposé sous le segment de convergence 18 et la paroi supérieure 24 qui est proximale audit segment 18 peut être inversé, à savoir que l'élément transparent ou translucide pourrait être au-dessus du segment de convergence et la paroi inférieure pourrait être proximale au segment de convergence.

Les éléments transparents ou translucides comme le collimateur 14, la lentille 16 et/ou l'élément 20, peuvent être réalisés en matière plastique, comme par exemple du polycarbonate (PC). Ils peuvent être d'un seul tenant tout comme ils peuvent être distincts et assemblés l'un à l'autre.

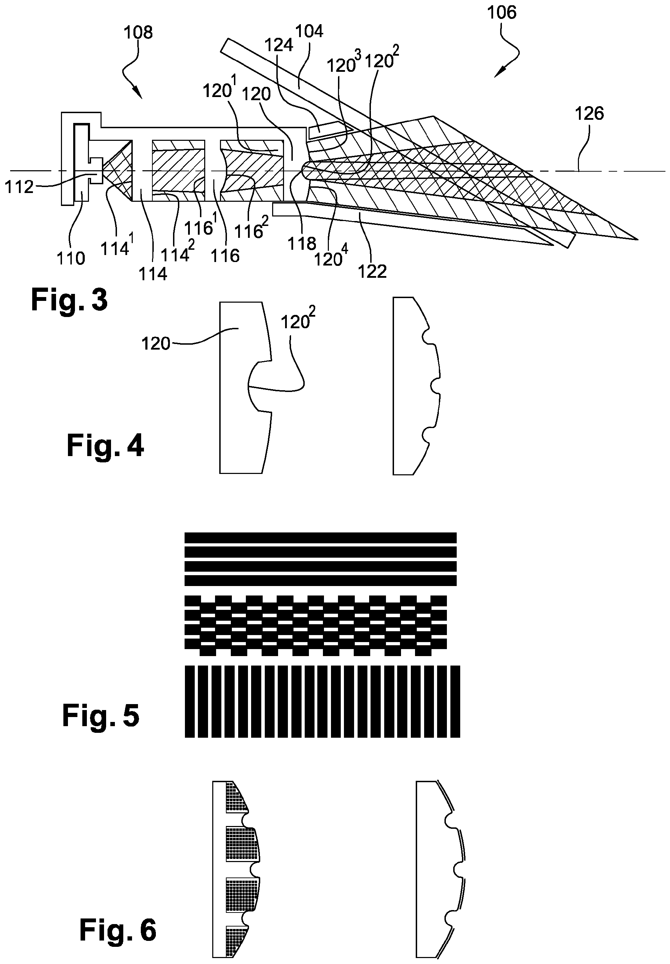

La figure 3 est une vue en coupe longitudinale III-III (par rapport au véhicule) du dispositif lumineux, ou feu, de la figure 1, conformément à un deuxième mode de réalisation. Les numéros de référence utilisés pour le premier mode de réalisation à la figure 2 sont utilisés pour désigner les éléments identiques ou correspondants du deuxième mode de réalisation, ces numéros étant toutefois majorés de 100. Il est par ailleurs fait référence à leur description en relation avec le premier mode de réalisation.

Le dispositif lumineux 106 comprend, similairement à celui de la figure 2, un module lumineux 108 et un masque 122 et 124. Le module lumineux 108 comprend, toujours similairement à celui de la figure 2, un support 110 de source(s) lumineuse(s) 112, un collimateur 114 et une lentille convergente 116. La lentille convergente peut présenter, similairement à celle du module lumineux de la figure 2, une face avant 116² pourvue de surface bombées, en forme de godrons, s'étendant essentiellement verticalement. Le module lumineux 108 se distingue du module lumineux 8 de la figure 2, essentiellement en ce que l'élément transparent ou translucide 120 situé à hauteur du segment de convergence 118 s'étendant de manière continue sur ledit segment, perpendiculairement à l'axe optique 126. La face arrière 120¹ de cet élément 120 peut être généralement plane et/ou lisse. La face avant, par contre, comprend une portion centrale 120², et une portion supérieure 120³ et une portion inférieure 120⁴, de part et d'autre de la portion centrale. La portion supérieure 120³ et/ou la portion inférieure 120⁴ sont grainées de manière à diffuser la lumière traversant l'élément 120. De manière complémentaire, l'élément peut comprendre dans sa masse des éléments diffusant à hauteur de ces portions supérieure 120³ et/ou inférieure 120⁴. La portion centrale 120² n'est, elle, pas grainée ou diffusante. Elle comprend le segment de convergence 118, si bien que les rayons convergeant en ce segment traversent cette portion centrale 120² de la face avant de l'élément 120.

La portion centrale 120² peut être en retrait ou en saillie par rapport aux portions supérieure 120³ et inférieure 120⁴. Elle peut également présenter un profil convexe en forme de dôme.

La paroi inférieure 122 du masque s'étend essentiellement suivant l'axe optique depuis le bord inférieur de la face avant de l'élément transparent ou translucide 120 jusqu'à la vitre 104 et, similairement, la paroi supérieure 124 s'étend vers l'avant depuis le bord supérieur de ladite face avant jusqu'à la vitre 104. La paroi inférieure 122 et/ou la paroi supérieure 124 peuvent être divergente par rapport à l'axe optique 126.

Lorsque le dispositif est éteint, l'élément transparent ou translucide 120, en particulier la portion supérieure 120³ et la portion inférieure 120⁴, formant la majeure partie de la face avant dudit élément 120, servent de cache pour le module lumineux. En effet, un observateur extérieur ne verra que les parois du masque et la face avant de l'élément transparent ou translucide 120. Le fait de grainer ces surfaces présente un double intérêt, à savoir d'une part de former une surface matte cachant à un observateur extérieur les détails de construction du module lumineux et, d'autre part, de diffuser les rayons lumineux qui ne convergent pas vers le segment de convergence 118, cette diffusion formant une surface éclairée homogène lorsque le dispositif est allumé.

La figure 4 illustre l'élément transparent ou translucide 120 de la figure 3 ainsi qu'une alternative comprenant trois portions en retrait en remplacement de la portion centrale 120² de l'élément 120.

La figure 5 illustre trois exemples de motifs de surface de style que l'on peut prévoir sur les zones grainées de la face avant de l'élément transparent 120 de la figure 3.

La figure 6 illustre, à gauche, l'élément transparent ou translucide 120 de la figure 3 pourvu d'insert en matériau diffusant, et, à droite, des zones grainées sur la face avant.

Dans les deux modes de réalisation qui viennent d'être décrits, le collimateur et la lentille forment un système optique apte à dévier les rayons lumineux émis par la ou les sources lumineuses de manière à converger en le point ou segment de convergence et à former un faisceau lumineux divergeant suivant l'axe optique du dispositif. Il est à noter que ce système optique peut diverger de celui décrit dans les deux modes de réalisation de l'invention. En effet, à titre d'exemple la collimation des rayons peut être assurée par la combinaison de plusieurs éléments optiques. Un ou plusieurs de ces éléments optique peuvent être courbes, notamment en présence d'un nombre réduit de sources lumineuses, comme notamment en présence d'une seule source lumineuse. La lentille peut notamment présenter une surface avant concave au lieu d'une surface convexe.

## Revendications

1. Dispositif de signalisation lumineuse (6 ; 106) destiné à être disposé derrière une vitre (4; 104) de lunette arrière de véhicule automobile, le dispositif comprenant :
- un emplacement pour au moins une source lumineuse (12 ; 112) apte à émettre des rayons lumineux ;
- un système optique (14, 16 ; 114, 116) apte à dévier les rayons lumineux émis par la ou les sources lumineuses (12 ; 112) de manière à converger en un point ou un segment (18 ; 118) et à former un faisceau lumineux divergeant suivant un axe optique (26) du dispositif ;
- un masque (22, 24 ; 122, 124) s'étendant depuis le point ou segment de convergence (18, 118), dans la direction du faisceau lumineux ;
- un élément transparent ou translucide (20; 120) s'étendant transversalement à l'axe optique (26 ; 126) à hauteur du point ou segment de convergence (18 ; 118), permettant de diffuser des rayons lumineux non focalisés et, partant, de compléter le faisceau lumineux produit.
**caractérisé en ce que en ce que** le masque comprend au moins une, préférentiellement plusieurs parois opaques (22, 24 ; 122, 124) s'étendant dans la direction du faisceau lumineux depuis le point ou segment de convergence (18 ; 118), de manière à positionner le point ou segment de convergence (18 ; 118) à distance de la vitre (4 ; 104) et **en ce que** l'élément transparent ou translucide (20 ; 120) comprend une face avant (20² ; 120³, 120⁴) grainée, ledit grainage préférentiellement présentant une rugosité Rₐ supérieure ou égale à 1µm.

2. Dispositif (6 ; 106) selon la revendication 1, **caractérisé en ce qu'**une des parois du masque est une paroi inférieure (22 ; 122) et une autre desdites parois est une paroi supérieure (24 ; 124).

3. Dispositif (6 ; 106) selon l'une des revendications 1 et 2, **caractérisé en ce que** les parois inférieure et supérieure (22, 24 ; 122, 124) sont divergentes dans la direction du faisceau lumineux.

4. Dispositif (6 ; 106) selon l'une des revendications 1 à 3, **caractérisé en ce que** les parois (22, 24 ; 122, 124) du masque comprennent des extrémités avant formant un plan moyen de contact avec la vitre (4 ; 104) qui est incliné par rapport à la perpendiculaire à l'axe optique (26, 126), ladite inclinaison étant préférentiellement d'au moins 20°, plus préférentiellement d'au moins 30°.

5. Dispositif (6 ; 106) selon l'une des revendications précédentes, **caractérisé en ce que** l'élément transparent ou translucide (20 ; 120) forme une paroi s'étendant perpendiculairement à l'axe optique (26 ; 126).

6. Dispositif (6, 106) selon l'une des revendications précédentes, **caractérisé en ce que** l'élément transparent ou translucide (20 ; 120) comprend une face arrière (20¹ ; 120¹) apte à recevoir des rayons lumineux émis par le système optique (14, 16 ; 114, 116).

7. Dispositif (6) selon l'une des revendications précédentes, **caractérisé en ce que** l'élément transparent ou translucide (20) est, transversalement à l'axe optique (26), à distance du point ou segment de convergence (18).

8. Dispositif (6) selon l'une des revendications 2 et 3 et selon la revendication 7, **caractérisé en ce qu'**une des parois inférieure et supérieure, préférentiellement la paroi supérieure (24), est située, transversalement à l'axe optique (26), en vis-à-vis de l'élément transparent ou translucide (20), du côté opposé audit élément (20) par rapport au point ou segment de convergence (18).

9. Dispositif (106) selon l'une des revendications 1 à 6, **caractérisé en ce que** l'élément transparent ou translucide (120) s'étend, transversalement à l'axe optique (126), sur le point ou segment de convergence (118).

10. Dispositif (106) selon la revendication précédente, **caractérisé en ce que** l'élément transparent ou translucide (120) comprend une face avant avec une portion centrale (120²) correspondant au point ou segment de convergence (118), et des portions supérieure (120³) et inférieure (120⁴) à la portion centrale (120²), lesdites portions supérieure (120³) et inférieure (120⁴) étant grainées de manière à être diffusantes.

11. Dispositif (106) selon la revendication précédente, **caractérisé en ce que** le grainage des portions supérieure (120³) et inférieure (120⁴) de la surface avant de l'élément transparent ou translucide (120) présente une rugosité Rₐ supérieure ou égale à 1µm.

12. Dispositif (106) selon l'une des revendications 10 et 11, **caractérisé en ce que** la portion centrale (120²) de la surface avant de l'élément transparent ou translucide (120) est en retrait ou en saillie par rapport aux portions supérieure (120³) et inférieure (120⁴).

13. Dispositif (106) selon l'une des revendications 10 à 12, **caractérisé en ce que** la portion centrale (120²) de la face avant de l'élément transparent ou translucide (120) présente un profil courbe convexe.

14. Dispositif (6 ; 106) selon l'une des revendications 1 à 13, **caractérisé en ce que** le système optique comprend un collimateur (14, 114) s'étendant suivant une direction principale transversale à l'axe optique (26 ; 126) et configuré pour dévier suivant ledit axe (26 ; 126) les rayons lumineux émis par la ou des sources lumineuses (12 ; 112) ; et une lentille (16, 116) s'étendant suivant une direction principale parallèle à la direction principale du collimateur (14 ; 114), configurée pour faire dévier les rayons provenant du collimateur (14 ; 114) vers le segment de convergence (18 ; 118), ledit segment s'étendant parallèlement au collimateur et à la lentille.

15. Dispositif (6 ; 106) selon la revendication précédente, **caractérisé en ce que** la lentille (16 ; 116) comprend une face avant (16² ; 116²) avec des surfaces courbes convexes s'étendant perpendiculairement à la direction principale de la lentille, lesdites surfaces préférentiellement correspondant à des portions de cylindre.

16. Dispositif (6 ; 106) selon l'une des revendications 14 et 15, **caractérisé en ce que** la lentille (16 ; 116) comprend une face arrière (16¹, 116¹) généralement plane.

## Patentansprüche

1. Lichtsignalvorrichtung (6; 106), die dazu bestimmt ist, hinter einer Heckscheibe (4; 104) eines Kraftfahrzeugs angeordnet zu sein, wobei die Vorrichtung Folgendes beinhaltet:
- eine Einbaustelle für mindestens eine Lichtquelle (12; 112), die dazu fähig ist, Lichtstrahlen zu emittieren;
- ein optisches System (14, 16; 114, 116), das dazu fähig ist, die durch die eine oder die mehreren Lichtquellen (12; 112) emittierten Lichtstrahlen abzulenken, sodass sie in einem Punkt oder einem Segment (18; 118) konvergieren und ein gemäß einer optischen Achse (26) der Vorrichtung divergierendes Lichtbündel bilden;
- eine Maske (22, 24; 122, 124), die sich von dem Konvergenzpunkt oder -segment (18, 118) in der Richtung des Lichtbündels erstreckt;
- ein transparentes oder transluzentes Element (20; 120), das sich in Höhe des Konvergenzpunkts oder -segments (18; 118) quer zu der optischen Achse (26; 126) erstreckt und es gestattet, nicht fokussierte Lichtstrahlen zu streuen und somit das erzeugte Lichtbündel zu ergänzen, **dadurch gekennzeichnet, dass** die Maske mindestens eine, vorzugsweise mehrere lichtundurchlässige Wände (22, 24; 122, 124) beinhaltet, die sich von dem Konvergenzpunkt oder -segment (18; 118) in der Richtung des Lichtbündels erstrecken, um den Konvergenzpunkt oder das Konvergenzsegment (18; 118) in einem Abstand zu der Scheibe (4; 104) zu positionieren, und dass das transparente oder transluzente Element (20; 120) eine gekörnte Vorderseite (20²; 120³, 120⁴) beinhaltet, wobei die Körnung vorzugsweise eine Rauheit Rₐ größer als oder gleich 1 µm aufweist.

2. Vorrichtung (6; 106) nach Anspruch 1, **dadurch gekennzeichnet, dass** eine der Wände der Maske eine untere Wand (22; 122) und eine andere der Wände eine obere Wand (24; 124) ist.

3. Vorrichtung (6; 106) nach einem der Ansprüche 1 und 2, **dadurch gekennzeichnet, dass** die untere und obere Wand (22, 24; 122, 124) in der Richtung des Lichtbündels divergieren.

4. Vorrichtung (6; 106) nach einem der Ansprüche 1 bis 3, **dadurch gekennzeichnet, dass** die Wände (22, 24; 122, 124) der Maske vordere Enden beinhalten, die eine mittlere Kontaktebene mit der Scheibe (4; 104) bilden, welche in Bezug auf die Senkrechte zu der optischen Achse (26, 126) geneigt ist, wobei diese Neigung vorzugsweise mindestens 20°, noch bevorzugter mindestens 30° beträgt.

5. Vorrichtung (6; 106) nach einem der vorhergehenden Ansprüche, **dadurch gekennzeichnet, dass** das transparente oder transluzente Element (20; 120) eine Wand bildet, die sich senkrecht zu der optischen Achse (26; 126) erstreckt.

6. Vorrichtung (6, 106) nach einem der vorhergehenden Ansprüche, **dadurch gekennzeichnet, dass** das transparente oder transluzente Element (20; 120) eine Rückseite (20¹; 120¹) beinhaltet, die dazu fähig ist, durch das optische System (14, 16; 114, 116) emittierte Lichtstrahlen zu empfangen.

7. Vorrichtung (6) nach einem der vorhergehenden Ansprüche, **dadurch gekennzeichnet, dass** sich das transparente oder transluzente Element (20) quer zu der optischen Achse (26) in einem Abstand zu dem Konvergenzpunkt oder -segment (18) befindet.

8. Vorrichtung (6) nach einem der Ansprüche 2 und 3 und nach Anspruch 7, **dadurch gekennzeichnet, dass** sich eine von der unteren und der oberen Wand, vorzugsweise die obere Wand (24), quer zu der optischen Achse (26), gegenüber dem transparenten oder transluzenten Element (20), auf der in Bezug auf den Konvergenzpunkt oder das Konvergenzsegment (18) entgegengesetzten Seite des Elements (20) befindet.

9. Vorrichtung (106) nach einem der Ansprüche 1 bis 6, **dadurch gekennzeichnet, dass** sich das transparente oder transluzente Element (120) quer zu der optischen Achse (126) über den Konvergenzpunkt oder das Konvergenzsegment (118) hinweg erstreckt.

10. Vorrichtung (106) nach dem vorhergehenden Anspruch, **dadurch gekennzeichnet, dass** das transparente oder transluzente Element (120) eine Vorderseite mit einem mittigen Abschnitt (120²), der dem Konvergenzpunkt oder -segment (118) entspricht, und einem zu dem mittigen Abschnitt (120²) oberen (120³) und unteren (120⁴) Abschnitt beinhaltet, wobei der obere (120³) und der untere (120⁴) Abschnitt gekörnt sind, um streuend zu sein.

11. Vorrichtung (106) nach dem vorhergehenden Anspruch, **dadurch gekennzeichnet, dass** die Körnung des oberen (120³) und unteren (120⁴) Abschnitts der vorderen Oberfläche des transparenten oder transluzenten Elements (120) eine Rauheit Rₐ größer als oder gleich 1 µm aufweist.

12. Vorrichtung (106) nach einem der Ansprüche 10 und 11, **dadurch gekennzeichnet, dass** der mittige Abschnitt (120²) der vorderen Oberfläche des transparenten oder transluzenten Elements (120) in Bezug auf den oberen (120³) und unteren (120⁴) Abschnitt vorspringt oder zurücksteht.

13. Vorrichtung (106) nach einem der Ansprüche 10 bis 12, **dadurch gekennzeichnet, dass** der mittige Abschnitt (120²) der Vorderseite des transparenten oder transluzenten Elements (120) ein konvexes gekrümmtes Profil aufweist.

14. Vorrichtung (6; 106) nach einem der Ansprüche 1 bis 13, **dadurch gekennzeichnet, dass** das optische System Folgendes beinhaltet: einen Kollimator (14, 114), der sich gemäß einer zu der optischen Achse (26; 126) quer verlaufenden Hauptrichtung erstreckt und dazu konfiguriert ist, die durch die eine oder die mehreren Lichtquellen (12; 112) emittierten Lichtstrahlen gemäß der Achse (26; 126) abzulenken; und eine Linse (16, 116), die sich gemäß einer zu der Hauptrichtung des Kollimators (14; 114) parallelen Hauptrichtung erstreckt und dazu konfiguriert ist, die von dem Kollimator (14; 114) kommenden Strahlen zu dem Konvergenzsegment (18; 118) hin abzulenken, wobei sich das Segment parallel zu dem Kollimator und der Linse erstreckt.

15. Vorrichtung (6; 106) nach dem vorhergehenden Anspruch, **dadurch gekennzeichnet, dass** die Linse (16; 116) eine Vorderseite (16²; 116²) mit konvexen gekrümmten Oberflächen beinhaltet, die sich senkrecht zu der Hauptrichtung der Linse erstrecken, wobei die Oberflächen vorzugsweise Zylinderabschnitten entsprechen.

16. Vorrichtung (6; 106) nach einem der Ansprüche 14 und 15, **dadurch gekennzeichnet, dass** die Linse (16; 116) eine im Wesentlichen ebene Rückseite (16¹, 116¹) beinhaltet.

## Claims

1. Light-emitting signalling device (6; 106) intended to be placed behind a glazing unit (4; 104) of a motor-vehicle rear window, the device comprising:
- a location for at least one light source (12; 112) able to emit light rays;
- an optical system (14, 16; 114, 116) able to deviate the light rays emitted by the one or more light sources (12; 112) so as to make them converge to a point or a segment (18; 118) and to form a light beam that is divergent along an optical axis (26) of the device;
- a mask (22, 24; 122, 124) extending from the point or segment of convergence (18, 118), in the direction of the light beam;
- a transparent or translucent element (20; 120) extending transversely to the optical axis (26; 126) level with the point or segment of convergence (18; 118), allowing unfocused light rays to be scattered and, thus, the light beam produced to be completed,
**characterized in that** the mask comprises at least one, and preferably a plurality of opaque walls (22, 24; 122, 124) extending in the direction of the light beam from the point or segment of convergence (18; 118), so as to position the point or segment of convergence (18; 118) at a distance from the glazing unit (4; 104) and **in that** the transparent or translucent element (20; 120) comprises a grained front face (20²; 120³, 120⁴), said graining preferably having an Rₐ roughness greater than or equal to 1 µm.

2. Device (6; 106) according to Claim 1, **characterized in that** one of the walls of the mask is a lower wall (22; 122) and another of said walls is an upper wall (24; 124) .

3. Device (6; 106) according to one of Claims 1 and 2, **characterized in that** the lower and upper walls (22, 24; 122, 124) are divergent in the direction of the light beam.

4. Device (6; 106) according to one of Claims 1 to 3, **characterized in that** the walls (22, 24; 122, 124) of the mask have front ends forming a mean plane of contact with the glazing unit (4; 104) that is inclined with respect to the perpendicular to the optical axis (26, 126), said inclination preferably being at least 20°, and more preferably at least 30°.

5. Device (6; 106) according to one of the preceding claims, **characterized in that** the transparent or translucent element (20; 120) forms a wall extending perpendicular to the optical axis (26; 126).

6. Device (6; 106) according to one of the preceding claims, **characterized in that** the transparent or translucent element (20; 120) comprises a rear face (20¹; 120¹) able to receive light rays emitted by the optical system (14, 16; 114, 116).

7. Device (6) according to one of the preceding claims, **characterized in that** the transparent or translucent element (20) is, transversely to the optical axis (26), at a distance from the point or segment of convergence (18) .

8. Device (6) according to one of Claims 2 and 3 and according to Claim 7, **characterized in that** one of the lower and upper walls, preferably the upper wall (24), is located, transversely to the optical axis (26), facing the transparent or translucent element (20), on the side opposite said element (20) with respect to the point or segment of convergence (18).

9. Device (106) according to one of Claims 1 to 6, **characterized in that** the transparent or translucent element (120) extends, transversely to the optical axis (126), to the point or segment of convergence (118).

10. Device (106) according to the preceding claim, **characterized in that** the transparent or translucent element (120) comprises a front face with a central portion (120²) corresponding to the point or segment of convergence (118), and upper and lower portions (120³, 120⁴) above and below the central portion (120²), respectively, said upper and lower portions (120³, 120⁴) being grained so as to be diffusing.

11. Device (106) according to the preceding claim, **characterized in that** the graining of the upper and lower portions (120³, 120⁴) of the front surface of the transparent or translucent element (120) has an Rₐ roughness greater than or equal to 1 µm.

12. Device (106) according to one of Claims 10 and 11, **characterized in that** central portion (120²) of the front surface of the transparent or translucent element (120) is recessed or protrudes with respect to the upper and lower portions (120³, 120⁴) .

13. Device (106) according to one of Claims 10 to 12, **characterized in that** the central portion (120²) of the front face of the transparent or translucent element (120) has a convex curved profile.

14. Device (6; 106) according to one of Claims 1 to 13, **characterized in that** the optical system comprises a collimator (14, 114) extending in a main direction transverse to the optical axis (26; 126) and configured to deviate, along said axis (26; 126), the light rays emitted by the one or more light sources (12; 112); and a lens (16, 116) extending in a main direction parallel to the main direction of the collimator (14; 114), said lens being configured to make rays delivered by the collimator (14; 114) deviate toward the segment of convergence (18; 118), said segment extending parallel to the collimator and to the lens.

15. Device (6; 106) according to the preceding claim, **characterized in that** the lens (16; 116) comprises a front face (16²; 116²) with convex curved surfaces extending perpendicular to the main direction of the lens, said surfaces preferably corresponding to cylindrical segments.

16. Device (6; 106) according to one of Claims 14 and 15, **characterized in that** the lens (16; 116) comprises a generally planar rear face (16¹, 116¹) .
